## Europäisches Patentamt
## European Patent Office
## Office européen des brevets

(11) Publication number: **0 101 313**
**B1**

## EUROPEAN PATENT SPECIFICATION

(45) Date of publication of patent specification: **04.10.89**

(51) Int. Cl.⁴: **G 01 G 13/16**, G 01 G 19/32

(21) Application number: **83304689.9**

(22) Date of filing: **12.08.83**

(54) Method and apparatus for collecting weighed articles discharged from combinatorial weighing system.

(30) Priority: **12.08.82 JP 140815/82**
**13.11.82 JP 171851/82**

(43) Date of publication of application:
**22.02.84 Bulletin 84/08**

(45) Publication of the grant of the patent:
**04.10.89 Bulletin 89/40**

(84) Designated Contracting States:
**DE FR GB IT**

(56) References cited:
**EP-A-0 052 498**
**EP-A-0 113 586**

(73) Proprietor: **KABUSHIKI KAISHA ISHIDA KOKI SEISAKUSHO**
**44, Shogoin Sannou-cho Sakyo-ku**
**Kyoto-shi Kyoto 606 (JP)**

(72) Inventor: **Mikami, Yoshiharu**
**126-12 Shimogamo Miyazaki-cho Sakyo-ku**
**Kyoto-shi Kyoto-shi Kyoto (JP)**
Inventor: **Ueda, Kenji**
**2-1-1 Ohe Minamifukunishi-cho Nishigyo-ku**
**Kyoto-shi Kyoto (JP)**

(74) Representative: **Fane, Christopher Robin King et al**
**HASELTINE LAKE & CO. Hazlitt House 28**
**Southampton Buildings Chancery Lane**
**London, WC2A 1AT (GB)**

## Description

This invention relates to a method and apparatus for discharging weighed articles, for example articles released from combinatorial weighing apparatus.

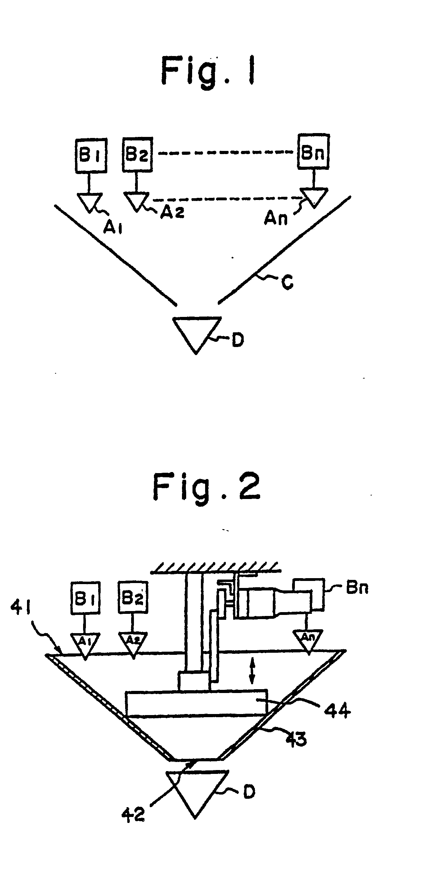

A known type of combinatorial weighing apparatus is provided with a plurality of weighing machines and operates by computing combinations of weight values provided by respective weighing machines, selecting a combination of those weight values which, when summed, give a total weight (or number) value equal to a preset target weight (or number), or closest to that target weight (or number), within preset allowable limits, and discharging the weighed articles from those weighing machines which provided the weight values belonging to the selected combination. In the known apparatus, the discharged articles are collected in a manner which will now be described with reference to Fig. 1 of the accompanying drawings.

As shown in Fig. 1, each of the weighing machines of the combinatorial weighing apparatus comprises a weighing hopper $A_1$, $A_2$, ..., $A_n$ and a weight sensor $B_1$, $B_2$, ..., $B_n$ associated therewith. The individual weight values of respective batches of articles supplied into those weighing hoppers $A_1$, $A_2$, ..., $A_n$ are measured by the associated weight sensors $B_1$, $B_2$, ..., $B_n$, and the total weight values of all possible combinations of the weighed article batches are computed, with the number of batch weight values in each combination being arbitrary or predetermined. The total weight values obtained are then compared with a preset target weight and a combination is selected which gives a total combined weight value equal to that target weight or closest to that target weight within preset allowable weight limits. The batches of articles in those weighing hoppers which provided the batch weight values of the selected combination are discharged into a collecting chute C, and the discharged articles are collected at the bottom of the chute, centrally thereof, and then introduced into a timing hopper D where the articles are recovered.

Alternatively, after the batch weight values have been found by the weight sensors $B_1$, $B_2$, ..., $B_n$, those batch weight values are divided by the unit weight of the articles to give an indication of the number of articles in each weighing hopper. Different combinations of batch number values are then added together and compared with a preset target number to determine which of those combinations has a total number of articles equal or closest (within preset allowable number limits) to the target number, and the batches of articles held by the weighing hoppers which provided the selected combination are discharged from those weighing hoppers into the chute C and recovered from the timing hopper D.

Although high weighing-out accuracy can be realized in either case, there is increasing demand for a combinatorial weighing system with an even higher weighing capacity. To improve weighing capacity, it is necessary to elevate the rate of supply and the measuring speed. In addition, it is of utmost importance that the weighed articles, which are discharged at the end of each weighing operation and then slide along the chute C under their own weight, be collected and discharged from the apparatus efficiently.

To this end, various collecting chute configurations have been devised, as shown by way of example in Figs. 2 to 5 of the accompanying drawings. The chute shown in Fig. 2 (and disclosed in EP—A—0 052 498) comprises a collecting chute 43 having an inlet opening 41, a discharge opening 42, and an intermediate shutter 44 suspended within the chute 43 above the discharge opening 42. A plurality of weighing hoppers A are arranged circumferentially above the inlet opening 41 of the collecting chute 43. Articles are discharged from the weighing hoppers A when the hoppers are open and are collected by the collecting chute 43 and supplied to a timing hopper D disposed below the collecting chute 43. At this time, the intermediate shutter 44 is raised or lowered depending upon the rate at which the articles slide downwardly along the chute 43. Thus, the shutter 44 separates the articles discharged from the weighing hoppers A at the end of the weighing cycle just completed from the articles discharged at the end of the last-completed weighing cycle, the separation taking place at the mid-portion of the collecting chute 43. Articles which the shutter 44 has allowed to pass are recovered in the timing hopper D.

It should be noted that there are situations in which the timing hopper D is not provided, for example because the combinatorial weighing apparatus is associated with a packaging machine. In such a case, either the articles are introduced into the packaging machine directly from the chute, or a distributing device is provided for operatively linking the single combinatorial weighing apparatus with two packaging machines, for example.

In the arrangement shown in Fig. 2, combinatorial weighing can take place at a rate higher than that ordinarily obtained. By virtue of the intermediate shutter 44 provided at the mid-portion of the collecting chute 43, articles discharged in the immediately preceding weighing cycle are prevented from mixing with articles discharged in the present weighing cycle, so that articles released by the weighing hoppers A at the end of each weighing cycle can be recovered in the timing hopper D in good order regardless of the higher rate of the combinatorial weighing operation.

However, when the collecting chute 43 is constructed in the above-described manner, it is necessary to provide a mechanism for vertically displacing the intermediate shutter 44 in synchronism with the opening and closing of the weighing hoppers A, thus complicating the construction of the apparatus. Moreover, the article discharge capacity cannot be increased beyond a certain limit because the collecting chute 43 is provided with movable portions.

In addition, since the collecting chute 43 has only one discharge opening 42, it is necessary to provide a distributing device when the combinatrial weighing apparatus is to be used in conjunction with a twin-tube packaging device. In such a case, the distributing capacity of this device can pose a major problem.

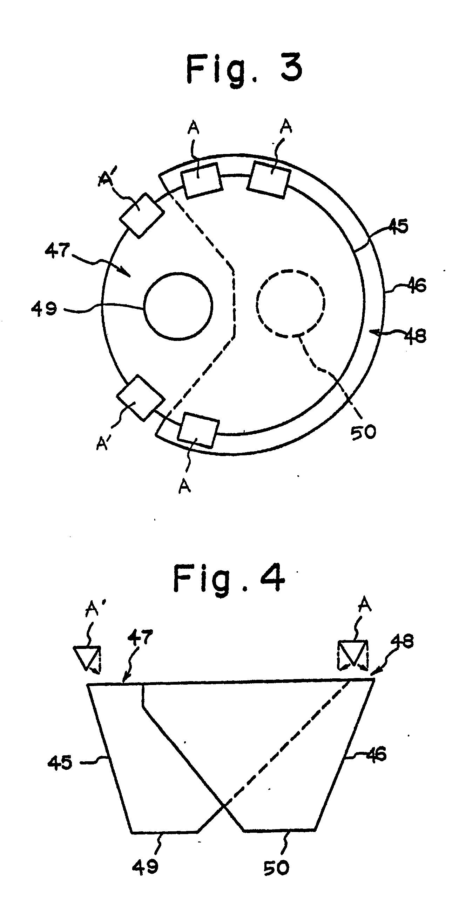

Figs. 3 and 4 of the accompanying drawings show an example of a known collecting chute (for example, as disclosed in EP—A—0 052 498) having a discharge passage separated, or divided, into two routes. An inner chute section 45 and an outer chute section 46 of inverted frusto-conical shape are arranged to intersect each other, so that respective upper supply openings 47, 48 thereof are arranged concentrically and respective lower discharge openings 49, 50 are arranged in side-by-side relation. The narrow discharge passage defined between the outer chute 46 and the inner chute 45 is partially cut out. Thus, the collecting chute has two independent discharge passages.

The operation of the arrangement shown in Figs. 3 and 4 will now be described. The combinatorial weighing apparatus includes a plurality of weighing hoppers A having a double-door construction and dual discharge openings arranged along the upper rim of the supply openings 47, 48 of the inner and outer chutes 45, 46. These weighing hoppers A release their articles into whichever of the inner and outer chutes 45, 46 is designated. The apparatus also includes a plurality of weighing hoppers A', arranged above the inner chute 45 where the outer chute 46 has been cut out, which are of necessity of the single-door type. The discharge route for these weighing hoppers A', is limited to the inner chute 45. The weighed articles are collected separately by the chutes 45, 46 which in turn discharge the articles separately.

With this arrangement, the configuration of the inner and outer chutes 45, 46 is complicated. Moreover, as illustrated in the drawings, none of the weighing hoppers can release their articles exclusively into the inner chute 45 or outer chute 46 by the opening of double doors. This places a limitation upon the combinatorial computations, and great difficulty may be experienced in terms of maintaining accuracy and function when the combinatorial weighing apparatus is to be employed with a pair of simultaneously operating packaging machines, or a pair of alternating, or independently operating, packaging machines.

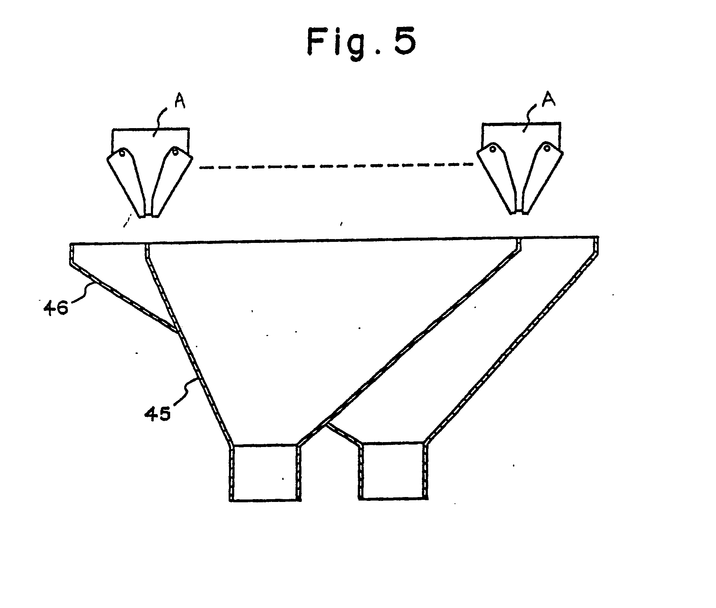

As shown in Fig. 5 of the accompanying drawings, apparatus has been proposed (in EP—A—0 052 498 for example) in which the entire upper circumference of the inner chute 45 is surrounded by the outer chute 46, so that the weighed articles may be discharged from any of the weighing hoppers A into either of the chutes 45, 46. With this arrangement, however, the inner and outer chutes 45, 46 have different discharge capacities owing to a difference in the rate at which weighed articles slide downwardly therealong. This is because the sloping surfaces of the inner and outer chutes 45, 46 have widely different angles of inclination.

Indeed, the angle of inclination of the sloping surface differs between different portions of the same chute. In addition, a narrow discharge passage is formed at the intersection of the outer chute 46 and inner chute 45, which may hamper the discharge of articles from the outer chute 46.

Accordingly, it is desirable to provide apparatus and a method for discharging batches of weighed articles from combinatorial weighing apparatus with which it is possible to raise the processing capacity per unit time of the weighing apparatus.

Such discharge apparatus would desirably also be readily attachable to, and detachable from, the main body of the weighing apparatus.

According to one aspect of the present invention there is provided a combinatorial weighing method, in which a weighing operation is carried out repeatedly to provide respective selected quantities of articles, wherein the said weighing operation comprises the steps of: supplying articles to be weighed to a plurality of weighing machines to provide them with respective batches of such articles, combining respective batch weight measures provided by the machines to find an acceptable combination of weighing machines holding a total combined weight equal to a preselected target weight of the articles, or closest to that preselected target weight within preset allowable limits, and discharging the batches from the machines constituting the said acceptable combination thereby to provide the required selected quantity of articles; characterised in that first and second compound chutes are arranged respectively for receiving articles discharge from first and second mutually-exclusive sets of the said machines, each compound chute having first and second mutually-separate throughways arranged so that both the first throughway of the first compound chute and the second throughway of the second compound chute lead to a first discharge outlet and so that both the second throughway of the first compound chute and the first throughway of the second compound chute lead to a second discharge outlet; and in that machines of the said first set that belongs to the said acceptable combination found in one said weighing operation are discharged into the said first throughway of the first compound chute whilst machines of the said second set that belongs to that acceptable combination are discharged into the said second throughway of the second compound chute, whereas machines of the said first set that belong to a second acceptable combination, found in a second said weighing operation, are discharged into the said second throughway of the first compound chute whilst machines of the said second set that belong to that second acceptable combination are discharged into the said first throughway of the second compound chute, the said first and second compound chutes being mutually similar in form so that the respective times taken for discharge of acceptable combinations to the said first discharged outlet are substantially the same on average as those taken for discharge of acceptable combinations to the said second discharge outlet.

According to another aspect of the present invention there is provided discharge chute apparatus, suitable for use in a method according to the immediately preceding paragraph, cmprising:

first and second compound chutes for receiving articles discharged respectively from such first and second sets of weighing machines, each compound chute having first and second mutually-separate throughways arranged so that both the first throughway of the first compound chute and the second throughway of the second compound chute lead to a first discharge outlet and so that both the second throughway of the first compound chute and the first throughway of the second compound chute lead to a second discharge outlet; the said first and second compound chutes being mutually similar in form.

According to yet another aspect of the present invention there is provided combinatorial weighing apparatus for carrying out a weighing operation repeatedly, to provide respective selected quantities of articles, which apparatus comprises:

supply means for supplying articles to be weighed to a plurality of weighing machines to provide them with respective batches of such articles in each operation;

combinatorial control means, connected with the said weighing machines, for combining respective batch weight measures provided by the machines to find in each weighing operation an acceptable combination of weighing machines holding a total combined weight equal to a preselected target weight of the articles, or closest to that preselected target weight within preset allowable limits; and

discharge means, connected with the combination control means, for discharging the batches of articles from the machines constituting the said acceptable combination, at the end of each weighing operation, thereby to provide the required selected quantity of articles;

characterised by first and second compound chutes arranged respectively for receiving articles discharged from first and second mutually-exclusive sets of the said machines, each compound chute having first and second mutually-separate throughways arranged so that both the first throughway of the first compound chute and the second throughway of the second compound chute lead to a first discharge outlet and so that both the second throughway of the first compound chute and the first throughway of the second compound chute lead to a second discharge outlet; and

further characterised in that the said discharge means are operable to cause machines of the said first set that belongs to the said acceptable combination found in one said weighing operation to be discharged into the said first throughway of the first compound chute and to cause machines of the said second set that belongs to that acceptable combination to be discharged into the said second throughway of the second compound chute, whereas machines of the said first set that belong to a second acceptable combination, found in a second said weighing operation, are caused to be discharged into the said second throughway of the first compound chute and machines of the said second set that belong to that second acceptable combination are discharged into the said first throughway of the second compound chute;

the said first and second compounds chutes being mutually similar in form so that the respective times taken for discharge of acceptable combinations to the said first discharge outlet when the apparatus is in use are substantially the same on average as those taken for discharge of acceptable combinations to the said second discharge outlet.

Reference will now be made, by way of example, to the accompanying drawings, in which:

Fig. 1 (described above) shows a schematic view of a prior art combinatorial weighing apparatus;

Figs. 2 to 5 (described above) show schematic views of prior art collecting chutes used with the apparatus of Fig. 1;

Fig. 6 shows an exploded perspective view of apparatus embodying the present invention;

Fig. 7 shows a perspective view illustrating the apparatus of Fig. 6 in its assembled state;

Fig. 8 shows a partially cut away longitudinal sectional view, seen from the front, of a combinatorial weighing apparatus provided with apparatus embodying the present invention;

Fig. 9 shows a transverse sectional view taken along line Y—Y of Fig. 8;

Fig. 10 shows a longitudinal sectional view, seen from the front, taken along line Z—Z of Fig. 9; and

Fig. 11 shows a perspective view of portions of apparatus embodying the present invention.

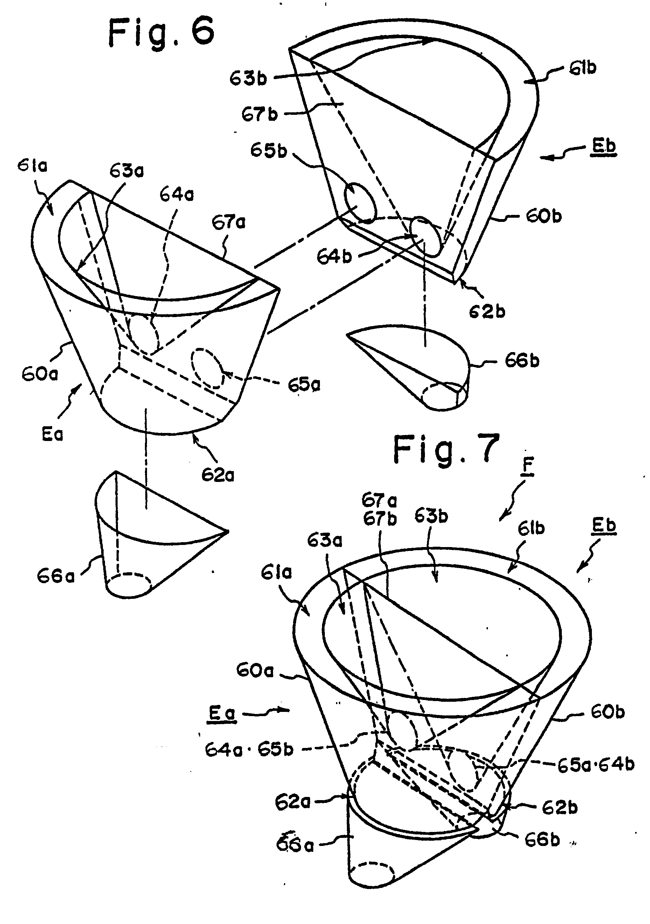

In Figs. 6 and 7 a collecting chute assembly F embodying the present invention comprises united first and second chutes Ea, Eb. Numerals 60a, 60b denote first and second outer chutes of inverted, bisected frusto-conical shape having semicircular upper openings 61a, 61b and semicircular lower openings 62a, 62b, respectively. Numerals 63a, 63b denote first and second inner chutes of inverted, bisected conical shape accommodated within the outer chutes 60a, 60b, respectively. The inner chutes 63a, 63b are supported at their upper ends, as by welds or screws, through the intermediary of partitioning plates 67a, 67b to form semicircular openings concentric with the openings 61a, 61b of the outer chutes 60a, 60b, respectively. Numerals 64a, 65a designate through-holes provided in the first partitioning plate 67a at the lower part thereof. Similarly, numerals 64b, 65b designate through-holes provided in the second partitioning plate 67b at the lower part thereof. The through-holes 64a, 64b are so located as to communicate with the lower portions of the first and second inner chutes 63a, 63b, respectively, accommodated within the respective first and second outer chutes 60a, 60b. Numerals 66a, 66b respective first and second discharge ports disposed below the lower openings 62a, 62b of the first and second outer chutes 60a, 60b, respectively.

The pair of first and second compound chutes Ea, Eb comprising the above-described elements are united into a unitary body, forming the collecting chute assembly F, by bringing the partitioning plates 67a, 67b into perfect face-to-face alignment. This is the condition, shown in Fig. 7, in which the chute is used. It will be seen that the through-holes 64a, 65a in the partitioning plate 67a are aligned respectively with the through-holes 65b, 64b in the partitioning plate 27b. In use, weighed articles introduced into the first inner chute 63a flow into the second outer chute 60b through the through-holes 64a, 65b provided in the respective partitioning plates 67a, 67b. These articles then are discharged from the lower opening 62b of the second outer chute 60b to a point outside the apparatus through the second discharge port 66b. On the other hand, weighed articles introduced into the second inner chute 63b flow into the first outer chute 60a through the through-holes 64b, 64a provided in the respective partitioning plates 67b, 67a. These articles then are discharged from the lower opening 62a of the first outer chute 60a to a point outside the apparatus through the first discharge port 66a.

To collect and discharge weighed articles from the combinatorial weighing apparatus through use of such a collecting chute assembly F embodying the present invention, a predetermined number of weighing hoppers are arranged along the circumference of a circle above the chute F. When weighed articles are released from the selected weighing hoppers of the combinatorial weighing apparatus at the end of a first weighing cycle, these articles may, by way of example, by introduced into the outer chute 60a of the first compound chute Ea and into the inner chute 63b of the second compound chute Eb, in which case the articles introduced into both the inner and outer chutes 60a, 63b are discharged to the outside, via the lower opening 62a of the first outer chute 60a, from the first discharge port 66a. Then, when articles are released from the selected weighing hoppers at the end of the next weighing cycle, these articles are introduced into the outer chute 60b of the second compound chute Eb and into the inner chute 63a of the first compound chute Ea. The articles introduced into both the inner and outer chutes 60b, 63a are discharged to the outside, via the lower opening 62b of the second outer chute 60b, from the second discharge port 66b.

Thus, in an embodiment of the present invention, first and second compound chutes are provided, each comprising an inner and outer chute. A first discharge route is formed by the inner chute of the first compound chute and the outer chute of the second compound chute. A second discharge route is formed by the inner chute of the second compound chute and the outer chute of the first compound chute. Articles released from selected weighing hoppers can be discharged into these two discharge routes alternately at the end of each combinatorial weighing cycle. With such an arrangement, articles slide downwardly along the two discharge routes through approximately equal distances and at approximately the same speed. Accordingly, the time required for the first discharge of weighed articles is substantially the same as that required for the second discharge. This means that the two discharge routes have substantially the same discharge capacity, and this enables the batches of articles obtained from the two discharge routes to be collected separately, and the batches to be discharged separately to an external point, all in good order. This arrangement permits combinatorial weighing apparatus to be operatively linked with two alternately operable packaging machines, or with two simultaneously operable packaging machines, in a very simple manner, in contrast to the above-mentioned prior art arrangements.

Furthermore, according to an embodiment of the present invention, any of the weighing hoppers in the circular array thereof overlying the collecting chute assembly can release their articles into any of the chutes 60a, 60b, 63a, 63b, so that there is no limitation upon combinatorial computations. In addition, the collecting chute embodying the present invention has no movable parts such as the aforementioned shutter. This both simplifies construction and can afford a large discharge capacity.

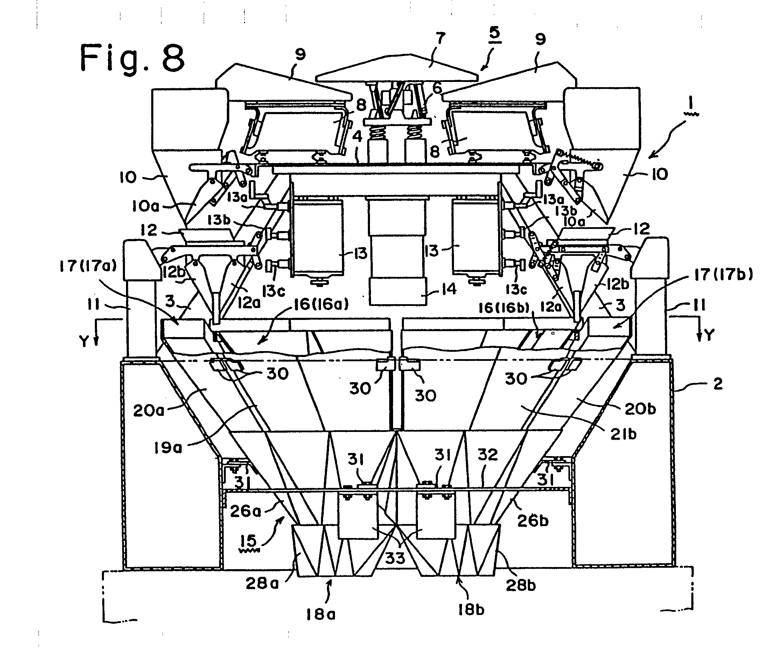

Moreover, as shown in Figs. 8 to 11, a collecting chute assembly embodying the present invention is composed of a plurality of component parts which enables the chute assembly to be disassembled.

With reference to Fig. 8, numeral 1 denotes the main body of a combinatorial weighing apparatus, and numeral 2 denotes a base for supporting the main body 1. A supporting platform 4 is supported above the base 2 at the central portion thereof by a plurality of support legs 3 the lower ends whereof are affixed to the base 2. Provided on the supporting platform 4 is a feeding unit 5 for feeding articles in distributive fashion. The feeding unit 5 includes a dispersing table 7 mounted centrally on the supporting platform 4 by means of a vibrator 6, a plurality of radially extending supply troughs 9 mounted on the supporting platform 4 through respective vibrators 8, the inner end of each supply trough 9 underlying the periphery of the dispersing table 7, and pool hoppers 10, equal in number to the supply troughs, attached to the periphery of the supporting platform 4 so as to underlie the outer ends of corresponding ones of the supply troughs 9. Weighing machines 11, equal in number to the pool hoppers 10, are disposed in a circular array on the base 2. A weighing hopper 12 is attached to each weighing machine 11, the weighing hoppers 12 being situated below corresponding ones of the pool hoppers 10. Each pool hopper 10 is equipped with a single gate 10a for discharging articles, contained in the hopper, into the underlying weighing hopper 12. Each weighing hopper 12 is equipped with two gates, namely an inwardly opening gate 12a and an outwardly opening gate 12b, where "inwardly" means towards the center of the weighing apparatus main body 1 and "outwardly" means away from the center. A hopper actuating device 13 is provided for each cooperating pair of pool hoppers 10 and weighing hoppers 12, the latter underlying the former as mentioned above. Numeral 14 designates a motor for operating each of the hopper actuating devices 13 through gears, not shown. The hopper actuating devices 13 and motor 14 depend from the underside of the supporting platform 4. Each hopper actuating device 13 is equipped with push-rods 13a, 13b, 13c. When thrust outwardly, the push-rod 13a opens the gate 10a of the pool hopper 10, and the push-rods 13b, 13c open the gates 12a, 12b of the weighing hopper 12, respectively.

Numeral 15 denotes a collecting chute assembly embodying the present invention. The collecting chute assembly 15, fitted on the base 2 below the array of weighing hoppers 12, is of substantially inverted conical shape. The upper part of the collecting chute 15 is provided with a substantially circular inner receiving portion 16 defining a substantially circular opening for receiving weighed articles discharged from the inwardly opening gates 12a of the weighing hoppers 12, and with an annular outer receiving portion 17 defining a substantially annular opening around the outer periphery of the inner receiving portion 16, for receiving weighed articles discharged from the outer opening gates 12b of the weighing hoppers 12. The lower part of the collecting chute 15 is provided with two side-by-side discharge portions 18a, 18b for supplying an underlying packaging machine or bucket conveyor (neither of which is shown) with weighed articles.

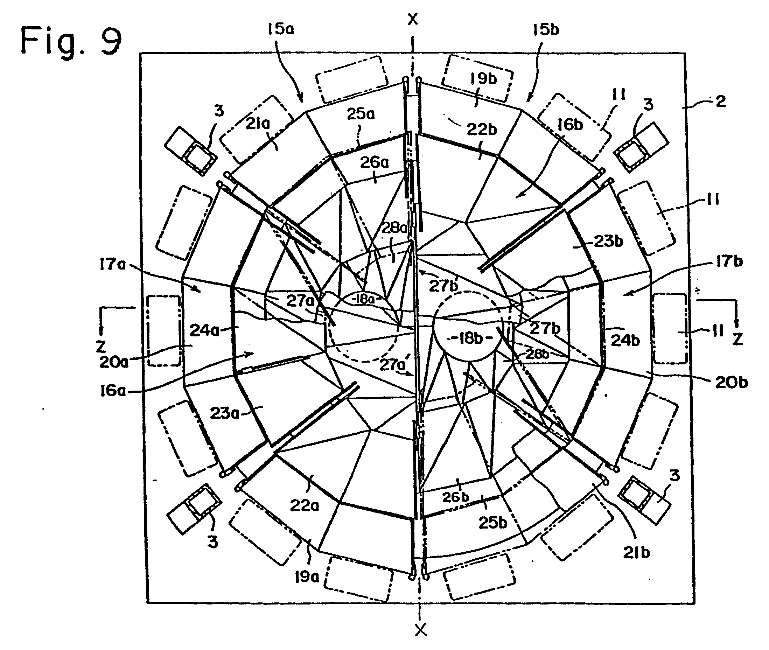

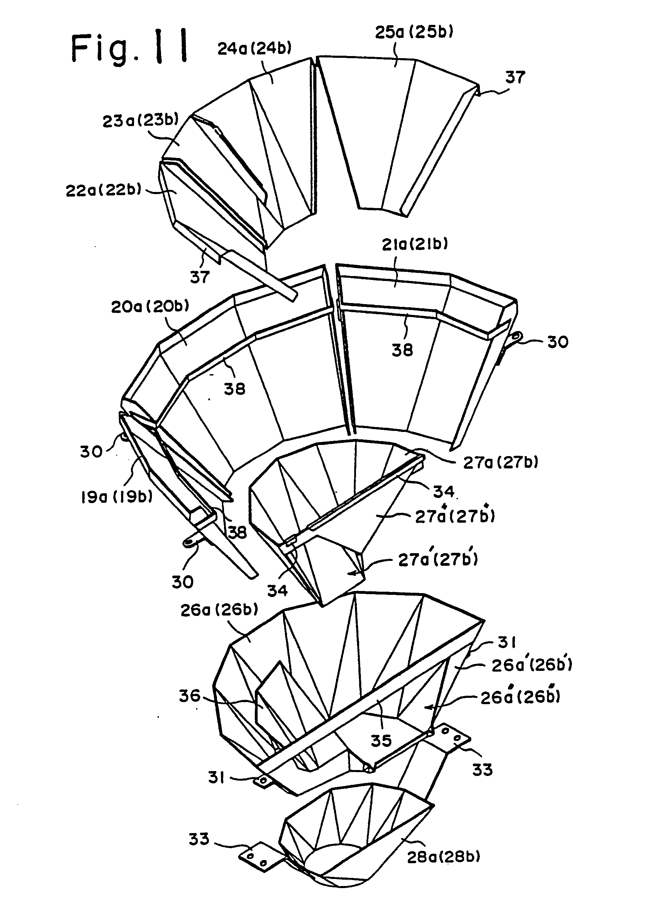

The collecting chute 15 having the inner and outer receiving portions 16, 17 at the upper part thereof and the two discharge portions 18a, 18b at the lower part thereof is constructed in the following manner by combining a number of components parts, as shown in Fig. 9 to 11. Specifically, the collecting chute 15 is divided into symmetrical right and left sections 15a, 15b by a longitudinal partitioning plane X—X, as shown in Fig. 9. In the illustrated embodiment, the weighing system is provided with 14 weighing machines 11 and, hence, with 14 weighing hoppers 12 for corresponding ones of the weighing machines. Accordingly, the left and right sections 15a, 15b of the collecting chute 15 each correspond to seven weighing hoppers 11. The left section 15a (and, likewise, the right section 15b), comprises: three upper, outer chutes 19a, 20a, 21a (19b, 20b, 21b) each having a sloping trough-like configuration and arranged to form a semicircular left-half section 17a (right-half section 17b) of the annular outer receiving portion 17; four upper, inner chutes 22a, 23a, 24a, 25a (22b, 23b, 24b, 25b) each having a sloping trough-like configuration and arranged to form a semicircular left-half section 16a (right-half section 16b) of the circular inner receiving portion 16; a lower, outer chute 26a (26b) contiguous to the lower end portions of the upper, outer chutes 19a, 20a, 21a; a lower, inner chute 27a (27b) contiguous to the lower end portions of the upper, inner chutes 22a, 23a, 24a, 25a; and a discharge chute 28a (28b) constituting the article discharge portion 18a (18b) (Fig. 8) and contiguous to the lower end portion of the lower, outer chute 26a, (26b). As shown in Fig. 11, the lower, outer chutes 26a, 26b of the left and right sections 15a, 15b have side walls 26a', 26b' along the dividing plane X—X, which are provided with wide openings 26a'', 26b'', respectively. Likewise, the lower, inner chutes 27a, 27b, which are situated inwardly of the lower, outer chutes 26a, 26b, have side walls 27a'', 27b'' along the dividing plane X—X, these side walls being provided with outlets 27a', 27b', respectively. The arrangement is such that the outlet 27a' of the lower, inner chute 27a belonging to the left section 15a extends into the lower, outer chute 26b of the right section 15b through the opening 26b'' of the lower, outer chute 26b, and also such that the outlet 27b' of the lower, inner chute 27b belonging to the right section 15b extends into the lower, outer chute 26a of the left section 15a through the opening 26a'' of the lower, outer chute 26a. The left and right lower, inner chutes 27a, 27b thereby communicate with the right and left discharge chutes 28b, 28a, respectively.

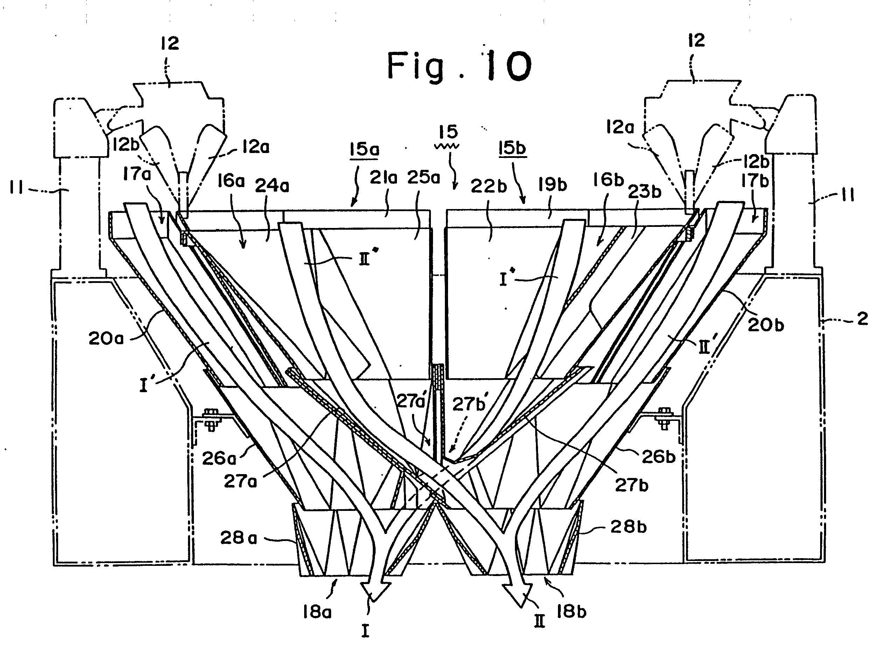

With the foregoing construction, first and second discharge routes I, II are formed in the collecting chute 15, as shown in Fig. 10. The first discharge route I is formed by merging routes I' and I''. The route I' extends from the outer receiving portion 17 of the left-half section 17a belonging to the left section 15a, to the left discharge chute 28a (discharge portion 18a), via the upper, outer chutes 19a to 21a and the lower, outer chute 26a of the left section 15a. The route I'' extends from the inner receiving portion 16 of the right-half section 16b belonging to the right section 15b to the left discharge chute 28a (discharge portion 18a), via the upper, inner chutes 22b to 25b and the lower, inner chute 27b of the right section 15b. The second discharge route II is formed by merging routes II', II''. The route II' extends from the outer receiving portion 17 of the right-half section 17b belonging to the right section 15b to the right discharge chute 28b (discharge portion 18b), via the upper, outer chutes 19b to 21b and the lower, outer chute 26b of the right section 15b. The route II'' extends from the inner receiving portion 16 of the left-half section 16a belonging to the left section 15a to the right discharge chute 28b (discharge portion 18b) via the upper, inner chutes 22a to 25a and the lower, inner chute 27a of the left section 15a.

As shown in Fig. 8, the upper, outer chutes 19a to 21a and 19b to 21b are attached to the base 2 by means of mounting members 30 fixedly secured to the outer side of each chute. The lower, outer chutes 26a, 26b are attached to the base 2, and to a mounting bar 32 bridging the base, by means of mounting members 31 fixedly secured to the outer side of each chute. The discharge chutes 28a, 28b are attached to the mounting bar 32 by mounting members 33 fixedly secured to the outer side of each discharge chute. As shown in Fig. 11, the lower, inner chute 27a (27b) is attached to the lower, outer chute 26a (26b) by engaging a bent portion 34, which is provided on the upper edge of the side wall 27a'' (27b'') of the chute 27a (27b), with a cross beam 35 provided on the upper edge of the side wall 26a' (26b') of the lower, outer chute 26a (26b), and by seating the underside of the lower, inner chute 27a (27b) on a supporting plate 36 formed integrally with the lower, outer chute 26a (26b). The upper, inner chutes 22a to 25a (22b to 25b) are supported on the upper, outer chutes 19a to 21a (19b to 21b) by engagement of a curved portion 37, which is formed along the upper edge of each upper, inner chute, with a strap-like engaging member 38 fixedly secured to each of the upper, outer chutes 19a to 21a (19b to 21b), and by letting the lower end portion of each upper, inner chute rest upon the inner wall surface of the lower, inner chute 27a (27b) at the upper portion thereof.

In operation, articles to be weighed are distributively supplied from the distributing table 7 of the weighing apparatus 1 to the weighing hoppers 12 of the weighing machines 11 through the troughs 9 and pool hoppers 10. The articles in each weighing hopper 12 are weighed by the corresponding weighing machines 11. The weighing apparatus then computes combinations of the measured weights, selects the combination giving a total combined weight value equal or closest to a preset target weight, and activates the hopper actuating devices 13 corresponding to the weighing hoppers 12 of the weighing machines 11 which belong to the selected combination. Each designated actuating device 13 responds by opening gate 12a or 12b of the corresponding weighing hopper 12. Consequently, only the articles contained in the corresponding weighing hoppers 12 are discharged into the underlying collecting chute 15. Those of the weighing hoppers 12 which have released their articles are immediately resupplied with articles in preparation for the next weighing cycle. The weighing apparatus 1 does this by causing the actuating devices 13 to open the gates 10a of those pool hoppers 10 situated above the empty weighing hoppers.

The arrangement is such that when the outwardly opening gates 12b of weighing hoppers 12 associated with selected weighing machines 11 in the left section 15a of the collecting chute 15 open, the inwardly opening gates 12a of the weighing hoppers 12 associated with selected weighing machines 11 in the right section 15b will also open. Further, at the next discharge cycle, the inwardly opening gates 12a of weighing hoppers 12 associated with selected weighing machines 11 in the left section 15a of the collecting chute 15, and the outwardly opening gates 12b of the weighing hoppers associated with the selected weighing machines 11 in the right section 15b, will open. Accordingly, at the first discharge cycle, weighed articles pass through the first discharge route I by flowing into the left discharge portion 18a from both the outer receiving portion 17 (left-half section 17a) in the left section 15a and the inner receiving portion 16 (right-half section 16b) in the right section 15b. At the next discharge cycle, weighed articles pass through the second discharge route II by flowing into the right discharge portion 18b from both the outer receiving portion 17 (right-half section 17b) in the right section 15b and the inner receiving portion 16 (left-half section 16a) in the left section 15a. Thus, weighed articles are supplied to a packaging machine at the end of each weighing cycle by passing through the first and second discharge routes I, II alternately.

The foregoing description relates to a so-called continuous weighing method wherein the weighing cycles are performed in a continuous manner, each cycle comprising the steps of supplying the weighing machines with articles to be weighed, weighing the articles, computing combinations, discharging articles and then returning to the supply step. However, a collecting chute embodying the present invention, having the above-described construction, can also be applied, without modification, to a so-called single-supply two-computation weighing apparatus, which operates by supplying articles to all of the weighing machines, computing two suitable combinations, and simultaneously discharging the articles belonging to one of the two combinations into one of the two discharge routes of the collecting chute and the articles belonging to the other combination into the other discharge route, thereby delivering two batches of articles to two awaiting packaging machines substantially simultaneously.

Weighed articles obtained from the weighing apparatus main body 1 each time a weighing operation is performed will not mix within the collecting chute 15. Thus, the weighed article batches can be separated reliably and supplied to a packaging machined at twice the processing capacity of a collecting chute having only one discharge route. In addition, since the discharge routes I, II have left-right symmetry, the weighed articles pass through both routes in approximately the same length of time, allowing the articles to be delivered to the packaging machine at an interval equivalent to the time interval between weighing operations performed by the weighing system. Consequently, unlike the prior-art arrangement described with reference to Fig.

5, there is no time loss resulting from having to set the weighing time interval to the maximum time required for passage of the articles through the longest discharge route.

Thus, in a collecting chute embodying the present invention, weighed articles discharged in successive weighing operations will not mix accidentally, even if the time interval between discharges is made very short. In addition, discharged articles can be supplied to a packaging machine or the like at a time interval equivalent to the discharge time interval. This makes it possible to raise, per unit of time, the processing capacity of such an automatic weighing system. Further, since a collecting chute embodying the present invention can be composed of a number of assembled component parts, the chute can be readily detached from, and reattached to, the weighing apparatus main body and disassembled to facilitate cleaning.

As many apparently widely different embodiments of the present invention can be made without departing from the spirit and scope thereof, it is to be understood that the invention is not limited to the specific embodiments thereof except as defined in the appended claims.

**Claims**

1. A combinatorial weighing method, in which a weighing operation is carried out repeatedly to provide respective selected quantities of articles, wherein the said weighing operation comprises the steps of:—

supplying articles to be weighed to a plurality of weighing machines (11, 12) to provide them with respective batches of such articles, combining respective batch weight measures provided by the machines (11, 12) to find an acceptable combination of weighing machines holding a total combined weight equal to a preselected target weight of the articles, or closest to that preselected target weight within preset allowable limits, and discharging the batches from the machines (11, 12) constituting the said acceptable combination thereby to provide the required selected quantity of articles;

characterised in that first and second compound chutes (15a, 15b) are arranged respectively for receiving articles discharged from first and second mutually-exclusive sets of the said machines (11, 12), each compound chute (15a, 15b) having first and second mutually-separate throughways (17a, 16a; 17b, 16b) arranged so that both the first throughway (17a) of the first compound chute (15a) and the second throughway (16b) of the second compound chute (15b) lead to a first discharge outlet (18a) and so that both the second throughway (16a) of the first compound chute (15a) and the first throughway (17b) of the second compound chute (15b) lead to a second discharge outlet (18b); and

in that machines (11, 12) of the said first set that belong to the said acceptable combination found in one said weighing operation are discharged into the said first throughway (17a) of the first compound chute (15a) whilst machines of the said second set that belong to that acceptable combination are discharged into the said second throughway (16b) of the second compound chute (15b), whereas machines of the said first set that belongs to a second acceptable combination, found in a second said weighing operation, are discharged into the said second throughway (16a) of the first compound chute (15a) whilst machines of the said second set that belong to that second acceptable combination are discharged into the said first throughway (17b) of the second compound chute (15b), the said first and second compound chutes (15a, 15b) being mutually similar in form so that the respective times taken for discharge of acceptable combinations to the said first discharge outlet (18a) are substantially the same on average as those taken for discharge of acceptable combinations to the said second discharge outlet (18b).

2. Discharge chute apparatus, suitable for use in a method as claimed in claim 1, comprising:

first and second compound chutes (15a, 15b) for receiving articles discharged respectively from such first and second sets of weighing machines (11, 12), each compound chute (15a, 15b) having first and second mutually-separate throughways (17a, 16a; 17b, 16b) arranged so that both the first throughway (17a) of the first compound chute (15a) and the second throughway (16b) of the second compound chute (15b) lead to a first discharge outlet (18a) and so that both the second throughway (16a) of the first compound chute (15a) and the first throughway (17b) of the second compound chute (15b) lead to a second discharge outlet (18b);

the said first and second compound chutes (15a, 15b) being mutually similar in form.

3. Combinatorial weighing apparatus for carrying out a weighing operation repeatedly, to provide respective selected quantities of articles, which apparatus comprises:

supply means (7 to 10) for supplying articles to be weighed to a plurality of weighing machines (11, 12) to provide them with respective batches of such articles in each operation;

combinatorial control means, connected with the said weighing machines (11, 12), for combining respective batch weight measures provided by the machines to find in each weighing operation an acceptable combination of weighing machines (11, 12) holding a total combined weight equal to a preselected target weight of the articles, or closest to that preselected target weight within preset allowable limits; and

discharge means (13, 14), connected with the combination control means, for discharging the batches of articles from the machines (11, 12) constituting the said acceptable combinaton, at the end of each weighing operation, thereby to provide the required selected quantity of articles;

characterised by first and second compound chutes (15a, 15b) arranged respectively for receiving articles discharged from first and second mutually-exclusive sets of the said machines (11, 12), each compound chute (15a, 15b) having first and second mutually-separate throughways (17a, 16a; 17b, 16b) arranged so that both the first throughway (17a) of the first compound chute (15a) and the second throughway (16b) of the second compound chute (15b) lead to a first discharge outlet (18a) and so that both the second throughway (16a) of the first compound chute (15a) and the first throughway (17b) of the second compound chute (15b) lead to a second discharge outlet (18b); and

further characterised in that the said discharge means (13, 14) are operable to cause machines (11, 12) of the said first set that belongs to the said acceptable combination found in one said weighing operation to be discharged into the said first throughway (17a) of the first compound chute (15a) and to cause machines of the said second set that belong to that acceptable combination to be discharged into the said second throughway (16b) of the second compound chute (15b), whereas machines of the said first set that belongs to a second acceptable combination, found in a second said weighing operation, are caused to be discharged into the said second throughway (16a) of the first compound chute (15a) and machines of the said second set that belong to that second acceptable combination are discharged into the said first throughway (17b) of the second compound chute (15b);

the said first and second compound chutes (15a, 15b) being mutually similar in form so that the respective times taken for discharge of acceptable combinations to the said first discharge outlet (18a) when the apparatus is in use are substantially the same on average as those taken for discharge of acceptable combinations to the said second discharge outlet (18b).

4. Apparatus as claimed in claim 3, wherein the machines of the said first set are equal in number to those of the said second set.

5. Apparatus as claimed in claim 2, 3 or 4, wherein each of the said first and second compound chutes comprises an outer chute of inverted, vertically bisected frusto-conical shape having a semicircular upper opening and a semicircular lower discharge opening, and an inner chute of inverted, vertically bisected conical shape disposed within said outer chute and having a semicircular upper opening and an outlet opening at a lower end thereof, said first and second compound chutes being united so that the diameters of the semicircular upper openings of the inner and outer chutes of said first compound chute coincide with the diameters of the semicircular upper openings of the inner and outer chutes, respectively, of said second compound chute, and so that the diameter of the semicircular lower discharge opening of said first compound chute coincides with the diameter of the semicircular lower discharge opening of said second compound chute;

there being first discharge port means arranged to receive articles from the lower discharge opening of the outer chute of said first compound chute and from the outlet opening of the inner chute of said second compound chute, and second discharge port means arranged to receive articles from the lower discharge opening of the outer chute of said second compound chute and from the outlet opening of the inner chute of said first compound chute.

6. Apparatus as claimed in claim 2, 3 or 4, wherein the first and second compound chutes together form a structure of inverted substantially conical shape having an inner article receiving portion defining an opening and an outer article receiving portion defining an opening, at the upper end of the structure, for receiving weighed articles from either an inwardly opening gate or an outwardly opening gate provided on each of a plurality of hoppers arrayed in a circle above the said structure, and having first and second article discharge portions provided side-by-side at the lower end thereof; said structure being made up of:

first and second upper outer chutes, of substantially semicircular cross-section forming respective halves of the said outer article receiving portion;

first and second upper inner chutes, of substantially semicircular cross-section, forming respective halves of the said inner article receiving portion;

first and second lower outer chutes contiguous respectively with lower end portions of said first and second upper outer chutes, confronting sides of said first and second lower outer chutes having respective openings;

first and second lower inner chutes contiguous respectively with lower end portions of said first and second upper inner chutes; and

first and second discharge chutes contiguous respectively with lower end portions of said first and second lower outer chutes and forming respectively said first and second article discharge portions;

said first lower inner chute having an outlet extending into said second lower outer chute through the said opening thereof from the said opening in said first lower outer chute, thereby placing said first lower inner chute in communication with said second discharge chute; and

said second lower inner chute having an outlet extending into said first lower outer chute through the said opening thereof from the opening in said second lower outer chute, thereby placing said second lower inner chute in communication with said first discharge chute.

7. Apparatus as claimed in claim 6, wherein said first and second upper outer chutes, said first and second lower outer chutes, said first and second upper inner chutes, said first and second lower inner chutes and said first and second discharge chutes can be disassembled from one another.

8. Apparatus as claimed in claim 6 or 7, wherein said first and second upper outer chutes and said first and second upper inner chutes are composed each of a plurality of components.

9. A method as claimed in claim 1, using apparatus as claimed in any one of claims 4 to 8.

**Patentansprüche**

1. Kombinatorisches Wägeverfahren, bei dem ein Wägevorgang wiederholt ausgeführt wird, um jeweilige ausgewählte Artikelmengen zu erstellen, wobei der Wägevorgang die folgenden Schritte umfaßt:

—Zuführen von zu wägenden Artikeln zu einer Gruppe von Wägemaschinen (11, 12), um diese mit jeweiligen Chargen solcher Artikel zu beschikken,

—Kombinieren jeweiliger von den Maschinen (11, 12) gelieferte Chargengewichtswerte, um eine akzeptable Kombination von Wägemaschinen zu finden, welche einen Gesamtgewichtswert enthält, der einem vorgewählten Zielgewichtswert der Artikel gleich oder diesem vorgewählten Zielgewichtswert innerhalb voreingestellter Zulässigkeitsgrenzen am nächsten ist, und

—Ausgeben der Chargen aus den die akzeptable Kombination bildenden Maschinen (11, 12), um so die erforderliche gewählte Artikelmenge zu erstellen;

dadurch gekennzeichnet, daß erste une zweite Compound-Rutschen (15a, 15b) jeweils zum Aufnehmen von aus sich gegenseitig ausschließenden ersten und zweiten Gruppen der genannten Wägemaschinen (11, 12) ausgegebenen Artikeln angeordnet sind, wobei jede Compound-Rutsche (15a, 15b) erste und zweite voneinander getrennte Durchgänge (17a, 16a; 17b, 16b) aufweist, die so angeordnet sind, daß sowohl der erste Durchgang (17a) der ersten Compound-Rutsche (15a), als auch der zweite Durchgang (16b) der zweiten Compound-Rutsche (15b) zu einem ersten Ausgabeauslaß (18a) führen und daß sowohl der zweite Durchgang (16a) der ersten Compound-Rutsche (15a), als auch der erst Durchgang (17b) der zweiten Compound-Rutsche (15b) zu einem zweiten Ausgabeauslaß (18b) führen; und

daß Maschinen (11, 12) der genannten ersten Gruppe, die zu der in einem Wägevorgang gefundenen akzeptablen Kombination gehören, in den ersten Durchgang (17a) der ersten Compound-Rutsche (15a) entleert werden, während Maschinen der genannten zweiten Gruppe, die zu der in einem Wägevorgang gefundenen akzeptablen Kombination gehören, in den zweiten Durchgang (16b) der zweiten Compound-Rutsche (15b) entleert werden, während Maschinen der genannten ersten Gruppe, die zu einer in einem zweiten Wägevorgang gefundenen zweiten akzeptablen Kombination gehören, in den zweiten Durchgang (16a) der ersten Compound-Rutsche (15a) entleert werden, während Maschinen der genannten zweiten Gruppe, die zu der zweiten akzeptablen Kombination gehören, in den ersten Durchgang (17b) der zweiten Compound-Rutsche (15b) entleert werden, wobei die genannten ersten und zweiten Compound-Rutschen von ähnlicher Form sind, so daß die jeweiligen zum Entleeren der akzeptablen Kombinationen in den ersten Ausgabeauslaß (18a) benötigten Zeiten im Durchschnitt im wesentlichen gleich den zum Entleeren von akzeptablen Kombinationen in den zweiten Ausgabeauslaß (18b) benötigten Zeiten sind.

2. Ausgaberutschenvorrichtung zur Verwendung in einem Verfahren nach Anspruch 1, mit:

—ersten und zweiten Compound-Rutschen (15a, 15b) zum Aufnehmen von jeweils aus solchen ersten und zweiten Gruppen von Wägemaschinen (11, 12) ausgegebenen Artikeln, wobei jede Compound-Rutsche (15a, 15b) erste und zweite voneinander getrennte Durchgänge (17a, 16a; 17b, 16b) aufweist, die so angeordnet sind, daß sowohl der erste Durchgang (17a) der ersten Compound-Rutsche (15a), als auch der zweite Durchgang (16b) der zweiten Compound-Rutsche (15b) zu einem ersten Ausgabeauslaß (18a) führen und daß sowohl der zweite Durchgang (16a) der ersten Compound-Rutsche (15a), als auch der erste Durchgang (17b) der zweiten Compound-Rutsche (15b) zu einem zweiten Ausgabeauslaß (18b) führen;

—wobei die genannten ersten und zweiten Compound-Rutschen (15a, 15b) von ähnlicher Form sind.

3. Kombinatorische Wägevorrichtung zum wiederholten Durchführen eines Wägevorgangs, um jeweilige gewählte Artikelmengen zu erstellen, mit:

—Zuführmitteln (7 bis 10) zum Zuführen von zu wägenden Artikeln zu einer Gruppe von Wägemaschinen (11, 12), um diese in jedem Vorgang mit jeweiligen Chargen solcher Artikel zu beschicken;

—mit den Wägemaschinen (11, 12) verbundenen kombinatorischen Steuermitteln zum Kombinieren jeweiliger von dem Maschinen gelieferter Chargengewichtswerte, um eine akzeptable Kombination von Wägemaschinen (11, 12) zu finden, welche einen Gesamtgewichtswert enthält, der einem vorgewählten Zielgewichtswert der Artikel gleich oder diesem vorgewählten Zielgewichtswert innerhalb voreingestellter Zulässigkeitsgrenzen am nächsten ist; und

—mit den Kombinationssteuermitteln verbundenen Ausgabemitteln (13, 14) zum Ausgeben der Artikelchargen aus den die akzeptable Kombination bildenden Maschinen (11, 12) am Ende jedes Wägevorganges, um so die erforderliche gewählte Artikelmenge zu liefern; gekennzeichnet durch

—erste und zweite jeweils zum Aufnehmen von aus sich gegenseitig ausschließenden ersten und zweiten Gruppen der Wägemaschinen (11, 12) ausgegebenen Artikeln angeordnete Compound-Rutschen (15a, 15b), wobei jede Compound-Rutsche (15a, 15b) erste und zweite voneinander getrennte Durchgänge (17a, 16a; 17b, 16b) aufweist, die so angeordnet sind, daß sowohl der ersten Durchgang (17a) der ersten Compound-Rutsche (15a), als auch der zweite Durchgang (16b) der zweiten Compound-Rutsche (15b) zu einem ersten Ausgabeauslaß (18a) führen und daß sowohl der zweite Durchgang (16a) der ersten Compound-Rutsche (15a), als auch der erste Durchgang (17b) der zweiten Compound-Rutsche (15b) zu einem zweiten Ausgabeauslaß (18b) führen; und

ferner dadurch gekennzeichnet, daß die Ausgabemittel (13, 14) derart betreibbar sind, daß sie die Entleerung der Maschinen (11, 12) der genannten ersten Gruppe, die zu der genannten in einem genannten Wägevorgang gefundenen akzeptablen Kombination gehören, in den ersten Durchgang (17a) der ersten Compound-Rutsche (15a) veranlassen, und daß sie die Entleerung der Maschinen der genannten zweiten Gruppe, die zu dieser akzeptablen Kombination gehören, in den zweiten Durchgang (16b) der zweiten Compound-Rutsche (15b) veranlassen, während Maschinen der genannten erste Gruppe, die zu einer zweiten in einem zweiten Wägevorgang gefundenen akzeptablen Kombination gehören, zur Ausgabe in den zweiten Durchgang (16a) der ersten Compound-Rutsche (15a) und Maschinen der genannten zweiten Gruppe, die zu dieser akzeptablen Kombination gehören, zur Ausgabe in den ersten Durchgang (17b) der zweiten Compound-Rutsche (15b) veranlaßt werden;

wobei die erste und zweite Compound-Rutsche (15a, 15b) von ähnlicher Form sind, so daß die jeweiligen zum Entleeren der akzeptablen Kombinationen in den ersten Ausgabeauslaß (18a) beim Betrieb der Vorrichtung benötigten Zeiten im Durchschnitt im wesentlichen gleich den zum Entleeren von akzeptablen Kombinationen in den zweiten Ausgabeauslaß (18b) benötigten Zeiten sind.

4. Vorrichtung nach Anspruch 3, bei der die Anzahl der Maschinen der genannten ersten Gruppe gleich der Anzahl derer der genanten zweiten Gruppe ist.

5. Vorrichtung nach Anspruch 2, 3 oder 4, bei der jede der genannten ersten und zweiten Compound-Rutschen eine äußere Rutsche von umgekehrter, vertikal halbierter Kegelstumpfform mit einer halbkreisförmigen oberen Öffnung und einer halbkreisförmigen unteren Ausgabeöffnung und eine in der äußeren Rutsche angeordnete innere Rutsche von umgekehrter, vertikal halbierter konischer Form mit einer halbkreisförmigen oberen Öffnung und einer Auslaßöffnung an ihrem unteren Ende aufweist, wobei die ersten und zweiten Ruschen derart vereinigt sind, daß die Durchmesser der halbkreisförmigen oberen Öffnungen der inneren und der äußeren Rutschen der ersten Compound-Rutsche mit den jeweiligen Durchmessern der halbkreisförmigen oberen Öffnungen der inneren und äußeren Rutschen der zweiten Compound-Rutsche übereinstimmen, und daß der Durchmesser der halbkreisförmigen unteren Ausgabeöffnung der ersten Compound-Rutsche mit dem Durchmesser der halbkreisförmigen unteren Ausgabeöffnung der zweiten Compound-Rutsche übereinstimmt;

wobei erste Ausgabe-Ports zum Aufnehmen von Artikeln aus der unteren Ausgabeöffnung der äußeren Rutsche der ersten Compound-Rutsche und aus der Auslaßöffnung der inneren Rutsche der zweiten Compound-Rutsche und zweite Ausgabe-Ports zum Aufnehmen von Artikeln aus der unteren Ausgabeöffnung der äußeren Rutsche der zweiten Compound-Rutsche und aus der Auslaßöffnung der inneren Rutsche der ersten Compound-Rutsche angeordnet sind.

6. Vorrichtung nach Anspruch 2, 3 oder 4, bei der die erste und die zweite Compound-Rutsche zusammen eine Struktur von umgekehrter, im wesentlichen konischer Form mit einem inneren Artikelaufnahmeteil bilden, der am oberen Ende der Struktur eine Öffnung zum Aufnehmen von gewogenen Artikeln aus entweder einem einwärts geöffneten Tor oder einem auswärts geöffneten Tor begrenzt, die an jedem Behälter einer in einem Kreis über der Struktur angeordneten Gruppe vorgesehen sind, und mit ersten und zweiten Artikelausgabeteilen, die nebeneinander am unteren Ende der Compound-Rutschen vorgesehen sind; wobei die Struktur aus den folgenden Elementen besteht:

—ersten und zweiten oberen äußeren Rutschen von im wesentlichen halbkreisförmigem Querschnitt, welche jeweilige Hälften des genannten äußeren Artikelaufnahmeteiles bilden;

—ersten und zweiten oberen inneren Rutschen von im wesentlichen halbkreisförmigem Querschnitt, welche jeweilige Hälften des genannten inneren Artikelaufnahmeteiles bilden;

—ersten und zweiten unteren äußeren Rutschen, die sich jeweils an untere Endteile der ersten und zweiten oberen äußeren Rutschen anschließen, wobei gegenüberliegende Seiten der ersten und zweiten unteren äußeren Rutschen jeweilige Öffnungen aufweisen;

—ersten und zweiten sich jeweils an die unteren Endteile der ersten und zweiten oberen inneren Rutschen anschließenden unteren inneren Rutschen;

—ersten und zweiten sich jeweils an untere Endteile der ersten und zweiten unteren äußeren Rutschen anschließenden und jeweils die ersten und zweiten Artikelausgabeteile bildenden Ausgaberutschen;

—wobei die erste untere innere Rutsche einen sich von der Öffnung in der ersten unteren äußeren Rutsche in die zweite untere äußere Rutsche durch deren Öffnung erstreckenden Ausgang aufweist, wodurch eine Verbindung zwischen der ersten unteren inneren Rutsche und der zweiten Ausgaberutsche hergestellt wird; und

—wobei die zweite unter innere Rutsche einen sich von der Öffnung in der zweiten unteren äußeren Rutsche in die erste untere äußere Rutsche durch deren Öffnung erstreckenden Ausgang aufweist, wodurch eine Verbindung zwischen der zweiten unteren inneren Rutsche und der ersten Ausgaberutsche hergestellt wird.

7. Vorrichtung nach Anspruch 6, bei der die ersten und zweiten oberen äußeren Rutschen, die ersten und zweiten unteren äußeren Rutschen, die ersten und zweiten oberen inneren Rutschen, die ersten und zweiten unteren inneren Rutschen und die ersten und zweiten Ausgaberutschen voneinander getrennt werden können.

8. Vorrichtung nach Anspruch 6 oder 7, bei der die ersten und zweiten oberen äußeren Rutschen und die ersten und zweiten oberen inneren Rutschen jeweils aus mehreren Komponenten bestehen.

9. Verfahren nach Anspruch 1 unter Verwendung einer Vorrichtung nach einem der Ansprüche 4 bis 8.

**Revendications**

1. Procédé de pesage combinatoire, dans lequel une opération de pesage est effectuée de manière répétée pour réaliser des quantités correspondantes choisies d'objets, dans lequel ladite opération de pesage comporte les étapes suivantes:

fourniture d'objets à peser à une pluralité de machines de pesage (11, 12) pour les pourvoir de lots respectifs de ces objets, combinaison de mesures respectives de poids de lots réalisées par les machines (11, 12) pour trouver une combinaison acceptable de machines de pesage détenant un poids total combiné égal à un poids visé d'objets, préalablement choisi, ou tout proche de ce poids visé, préalablrement choisi, dans des limites admissibles préétablies, et déchargement des lots des machines (11, 12) constituant ladite combinaison acceptable pour fournir de ce fait la quantité nécessaire choisie d'objets;

caractérisé en ce qu'une première et une seconde goulottes composites (15a, 15b) sont agencées respectivement pour recevoir des objets déchargés d'un premier et d'un second ensembles, s'excluant mutuellement, desdites machines (11, 12), chaque goulotte composite (15a, 15b) ayant un premier et un second couloirs mutuellement séparés (17a, 16a; 17b, 16b) agencés de façon que le premier couloir (17a) de la première goulotte composite (15a) et le second couloir (16b) de la seconde goulotte composite (15b) conduisent tous deux à une première sortie de déchargement (18a) et de façon que le second couloir (16a) de la première goulotte composite (15a) et le premier couloir (17b) de la seconde goulotte composite (15b) conduisent tous deux à une seconde sortie de déchargement (18b); et

en ce que les machines (11, 12) dudit premier ensemble qui appartiennent à ladite combinaison acceptable trouvée lors de ladite opération de pesage soient déchargées dans ledit premier couloir (17a) de la première goulotte composite (15a) tandis que les machines dudit second ensemble qui appartiennent à cette combinaison acceptable sont déchargées dans ledit second couloir (16b) de la seconde goulotte composite (15b), tandis que les machines dudit premier ensemble qui appartiennent à une seconde combinaison acceptable, trouvée lors d'une seconde opération de pesage, sont déchargées, dans ledit second couloir (16a) de la première goulotte composite (15a) pendant que les machines dudit second ensemble qui appartiennent à cette seconde combinaison acceptable sont déchargées dans ledit premier couloir (17b) de la seconde goulotte composite (15b), lesdites première et seconde goulottes composites (15a, 15b) étant de formes sensiblement semblables de façon que les temps respectifs de déchargement de combinaisons acceptables jusqu'à ladite première sortie de déchargement (18a) soient en moyenne sensiblement les mêmes que ceux pris pour le déchargement de combinaisons acceptables jusqu'à ladite seconde sortie de déchargement (18b).

2. Appareil à goulottes de déchargement utilisable dans un procédé selon la revendication 1, comprenant:

une première et une seconde goulottes composites (15a, 15b) pour recevoir des objets respectivement déchargés desdits premier et second ensembles de machines de pesage (11, 12), chaque goulotte composite (15a, 15b) ayant un premier et un second couloirs mutuellement séparés (17a, 16a; 17b, 16b) agencés de façon que le premier couloir (17a) de la première goulotte composite (15a) et le second couloir (16b) de la seconde goulotte composite (15b) conduisent tous deux à une première sortie de chargement (18a), et de façon que le second couloir (16a) de la première goulotte composite (15a) et le premier couloir (17b) de la seconde goulotte composite (15b) conduisent tous deux à une seconde sortie de déchargement (18b);

lesdites première et seconde goulottes composites (15a, 15b) étant de formes mutuellement semblables.

3. Appareil de pesage combinatoire pour effectuer de manière répétée une opération de pesage, pour fournir des quantités correspondantes choisies d'objets, lequel appareil comporte:

des moyens d'alimentation (7 à 10) pour fournir des objets à peser à une pluralité de machines de pesage (11, 12) afin de leur fournir des lots respectifs de ces objets lors de chaque opération;

un moyen de commande de combinaisons, relié auxdites machines de pesage (11, 12), pour combiner des mesures respectives de poids de lots fournies par les machines pour trouver lors de chaque opération de pesage une combinaison acceptable de machines de pesage (11, 12) détenant un poids total combiné égal à un poids visé d'objets, préalablement choisi, ou tout proche de ce poids visé préalablement choisi, dans des limites admissibles préétablies; et

des moyens de déchargement (13, 14) reliés au moyen de commande de combinaisons pour décharger les lots d'objets des machines 11, 12) constituant ladite combinaison acceptable, à la fin de chaque opération de pesage pour obtenir de ce fait la quantite nécessaire choisie d'objets;

caractérisé par une première et une seconde goulottes composites (15a, 15b) agencées respectivement pour recevoir des objets déchargés d'un premier et d'un second ensembles, s'excluant mutuellement, desdites machines (11, 12), chaque goulotte composite (15a, 15b) ayant un premier et un second couloirs mutuellement séparés (17a, 16a; 17b, 16b) agencés de façon que le premier couloir (17a) de la première goulotte composite (15a) et le second couloir (16b) de la seconde goulotte composite (15b) conduisent tous deux à une première sortie de déchargement (18a) et de façon que le second couloir (16a) de la première goulotte composite (15a) et le premier couloir (17b) de la seconde goulotte composite (15b) conduisent tous deux à une seconde sortie de déchargement (18b); et

caractérisé en outre en ce que lesdits moyens de déchargement (13, 14) sont manoeuvrables pour amener les machines (11, 12) dudit premier ensemble qui appartiennent à ladite combinaison acceptable trouvée lors de ladite opération de pesage à être déchargées dans ledit premier couloir (17a) de la première goulotte composite (15a) et pour amener les machines dudit second ensemble qui appartiennent à cette combinaison acceptable à être déchargées dans ledit second couloir (16b) de la seconde goulotte composite (15b), tandis que les machines dudit premier ensemble qui appartiennent à une seconde combinaison acceptable, trouvée lors de ladite second opération de pesage, sont amenées à être déchargées dans ledit second couloir (16a) de la première goulotte composite (15a) et les machines dudit second ensemble qui appartiennent à cette seconde combinaison acceptable sont déchargées dans ledit premier couloir (17b) de la seconde goulotte composite (15b)

lesdites première et seconde goulottes composites (15a, 15b) étant de formes mutuellement semblables de façon que les temps respectifs pris pour de déchargement de combinaisons acceptables jusqu'à ladite première sortie de déchargement (18a) quant l'appareil est en service sont en moyenne sensiblement les mêmes que ceux pour le déchargement de combinaisons acceptables jusquà ladite seconde sortie de déchargement (18b).

4. Appareil selon la revendication 3, dans lequel les machines dudit premier ensemble sont égales en nombre à celles dudit second ensemble.

5. Appareil selon la revendication 2, 3 ou 4, dans lequel chacune desdites première et seconde goulottes composites comprend une goulotte extérieure de forme tronconique inversée, divisée verticalement en deux parties, ayant une ouverture supérieure semi-circulaire et une ouverture inférieure semi-circulaire de déchargement, et une goulotte intérieure en forme de cône inversé, divisée verticalement en deux parties, disposée dans ladite goulotte extérieure et ayant une ouverture supérieure semicirculaire et une ouverture de sortie à son extrémité inférieure, lesdites première et seconde goulottes composites étant unies de façon que les diamètres des ouvertures supérieures semi-circulaires des goulottes intérieure et extérieure de ladite première goulotte composite coïncident respectivement avec les diamètres des ouvertures supérieures semi-circulaires des goulottes intérieure et extérieure de ladite second goulotte composite, et de façon que le diamètre de l'ouverture inférieure semi-circulaire de déchargement de ladite première goulotte composite coïncide avec le diamètre de l'ouverture inférieure semi-circulaire de déchargement de ladite seconde goulotte composite;

des premiers moyens formant orifices de déchargement étant disposés pour recevoir des objets issus de l'ouverture inférieure de déchargement de la goulotte extérieure de ladite première goulotte composite et issus de l'ouverture de sortie de la goulotte intérieure de ladite seconde goulotte composite, et des seconds moyens formant orifices de déchargement étant disposés pour recevoir des objets issus de l'ouverture inférieure de déchargement de la goulotte extérieure de ladite seconde goulotte composite et issus de l'ouverture de sortie de la goulotte intérieure de ladite première goulotte composite.

6. Appareil selon la revendication 2, 3 ou 4, dans lequel les première et seconde goulottes composites forment à elles deux une structure de forme sensiblement conique inversée ayant une partie intérieure réceptrice d'objets définissant une ouverture et une partie extérieure réceptrice d'objets définissant une ouverture, à l'extrémité supérieure de la structure, pour recevoir des objets pesés soit depuis une trappe ouvrant vers l'intérieur, soit depuis une trappe ouvrant vers l'extérieur, présente sur chaque trémie d'une pluralité de trémies alignées en cercle au-dessus de ladite structure, et ayant une première et une seconde parties pour déchargement d'objets, disposées côte-à-côte à leur extrémité inférieure; ladite structure étant constituée par:

une première et une seconde goulottes extérieures supérieures, à section transversale sensiblement semi-circulaire, formant des moitiés respectives de ladite partie extérieure réceptrice d'objets;

une première et une seconde goulottes intérieures supérieures, à section transversale sensiblement semi-circulaire, formant des moitiés respectives de ladite partie intérieure réceptrice d'objets;

une première et une seconde goulottes extérieures inférieures respectivement contiguës aux parties extrêmes inférieures desdits première et seconde goulottes extérieures supérieures, en regard des côtés desdites première et seconde goulottes extérieures inférieures ayant des ouvertures correspondantes;

une première et une seconde goulottes intérieures inférieures respectivement contiguës aux parties extrêmes inférieures desdites première et seconde goulottes intérieures supérieures; et

une première et une seconde goulottes de déchargement respectivement contiguës aux parties extrêmes inférieures desdites première et seconde goulottes extérieures inférieures et formant respectivement lesdites première et seconde parties pour déchargement d'objets;

ladite première goulotte intérieure inférieure ayant une sortie qui s'étend jusque dans ladite seconde goulotte extérieure inférieure à travers à travers ladite ouverture de celle-ci depuis ladite ouverture de ladite première goulotte extérieure inférieure, en faisant de ce fait communiquer ladite première goulotte intérieure inférieure avec ladite second goulotte de déchargement; et

ladite second goulotte intérieure inférieure ayant une sortie qui s'étend jusque dans ladite première goulotte extérieure inférieure à travers ladite ouverture de celle-ci depuis l'ouverture de ladite seconde goulotte extérieure inférieure, en faisant de ce fait communiquer ladite seconde goulotte intérieure inférieure avec ladite première goulotte de déchargement.

7. Appareil selon la revendication 6, dans lequel lesdites première et seconde goulottes extérieures supérieures, lesdites première et seconde goulottes extérieures inférieures, lesdites première et seconde goulottes intérieures supérieures, lesdites première et seconde goulottes intérieures inférieure et lesdites première et seconde goulottes de déchargement peuvent être démontées les unes des autres.

8. Appareil selon la revendication 6 ou 7, dans lequel lesdites première et seconde goulottes extérieures supérieures et lesdites première et seconde goulottes intérieures supérieures sont composées chacune d'une pluralité de composants.

9. Procédé selon la revendication 1, utilisant l'appareil revendiqué selon l'une quelconque des revendications 4 à 8.

# Fig. 1

# Fig. 2

# Fig. 3

A    A

A'

47

49

45

46

48

50

A'

A

# Fig. 4

A'    A

47    48

45    46

49    50

2

# Fig. 5

A

A

46

45

## Fig. 6

## Fig. 7

Fig. 8

Fig. 9

EP 0 101 313 B1

# Fig. 10

EP 0 101 313 B1

Fig. 11